(19)
Europäisches
Patentamt
European
Patent Office
Office européen
des brevets

(11) **EP 2 956 572 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(21) Anmeldenummer: **14711701.4**

(22) Anmeldetag: **28.02.2014**

(51) Int Cl.:
***C25B 15/00*** *(2006.01)* ***C25B 9/04*** *(2006.01)*
***C25B 9/18*** *(2006.01)* ***C25B 1/04*** *(2006.01)*

(86) Internationale Anmeldenummer:
**PCT/EP2014/053947**

(87) Internationale Veröffentlichungsnummer:
**WO 2014/146885 (25.09.2014 Gazette 2014/39)**

(54) **ELEKTROLYSESTACK UND ELEKTROLYSEUR**
ELECTROLYSIS STACK AND ELECTROLYSING DEVICE
EMPILEMENT D'ÉLECTROLYSE ET ÉLECTROLYSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2013 DE 102013204758**
**21.08.2013 EP 13181180**

(43) Veröffentlichungstag der Anmeldung:
**23.12.2015 Patentblatt 2015/52**

(73) Patentinhaber: **Siemens Aktiengesellschaft**
**80333 München (DE)**

(72) Erfinder:
- **HAHN, Alexander**
**91341 Röttenbach (DE)**
- **HEROLD, Jochen**
**96260 Weismain (DE)**
- **WEIDAUER, Jens**
**90763 Fürth (DE)**

(56) Entgegenhaltungen:
**US-A- 4 310 605**
**US-A1- 2006 246 331**
**US-A1- 2011 200 899**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 956 572 B1

Printed by Jouve, 75001 PARIS (FR)

**Beschreibung**

Die Erfindung betrifft einen Elektrolysestack für einen Elektrolyseur mit mehreren Elektrolysezellen und mehreren Schaltmitteln, welcher in mehrere jeweils eine bestimmte Anzahl von den Elektrolysezellen umfassende, unter Verwendung der Schaltmittel elektrisch kurzschließbare Segmente elektrisch unterteilt ist. Weiter betrifft die Erfindung einen Elektrolyseur mit einem solchen Elektrolysestack. Zudem betrifft die Erfindung ein Energieversorgungssystem mit einem solchen Elektrolyseur und einer mit dem Elektrolyseur verbundenen, erneuerbaren Energiequelle.

Ein Elektrolyseur ist aus http://de.wikipedia.org/wiki/Elektrolyseur (erhältlich am 15.07.2013) bekannt und ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Bei einem solchen Elektrolyseur für die Wasserstoffelektrolyse, bekannt ist hier ein alkalischer Elektrolyseur oder ein saurer bzw. PEM-Elektrolyseur, wird Wasser in Wasserstoff und Sauerstoff zerlegt.

Aktuelle Überlegungen (http://de.wikipedia.org/wiki/EE-Gas, erhältlich am 15.07.2013) gehen dahin, mit überschüssiger Energie aus erneuerbaren Energiequellen, wie in Zeiten überdurchschnittlicher Solarstrom- oder Windkrafterzeugung bei entsprechenden Anlagen, Elektrolyseure zu betreiben, beispielsweise um sogenanntes EE-Gas herzustellen.

Dabei erzeugt ein an die erneuerbare Energiequelle angeschlossener (Wasserstoffelektrolyse-)Elektrolyseur mit Hilfe deren Energie zunächst Wasserstoff, welcher anschließend in einem Sabatierprozess zusammen mit Kohlendioxid zur Herstellung von Methan verwendet wird. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom (Wasserstoffelektrolyse-)Elektrolyseur erzeugte Wasserstoff auch unmittelbar weiterverwendet werden, beispielsweise für eine Brennstoffzelle.

Ein Elektrolyseur besteht üblicherweise aus mehreren elektrisch in Serie geschalteten, zu einem Elektrolysestack oder jeweils zu mehreren, in Reihe oder parallel verschalteten Elektrolysestacks zusammengefassten Elektrolysezellen. Anzahl und Art der Elektrolysezellen sowie deren Verschaltung legen dabei eine spezifische (U-I-)Kennlinie des Elektrolyseurs fest.

Eine Elektrolysezelle besteht dabei wiederum aus einer Anode und einer Kathode. Im Fall von der alkalischen Elektrolysezelle befindet sich zwischen der Anode und der Kathode ein Elektrolyt, üblicherweise Kalilauge, und ein Seperator. Im Fall von der PEM-Elektrolysezelle befindet sich zwischen der Anode und der Kathode eine gasdichte Polymer-Elektrolyt-Membran.

Der Elektrolyseur benötigt zum Betrieb eine Gleichspannung.

Bei der Energieversorgung eines Elektrolyseurs über ein Wechselspannungs- bzw. Drehstromnetz ist demnach der Einsatz eines Wandlers erforderlich. Mit Hilfe dieses Wandlers lässt sich die Gleichspannung in ihrer Höhe steuern und auf diese Weise ein Arbeitspunkt des Elektrolyseurs entsprechend seiner Kennlinie einstellen.

Bei der elektrischen Energieversorgung eines Elektrolyseurs durch eine erneuerbare Energiequelle, d.h. hier sind der Elektrolyseur und die erneuerbare Energiequelle über eine gemeinsame Gleichspannungsschiene miteinander verbunden, kann dessen Betrieb auch ohne den Einsatz eines Wandlers als Steuermittel erfolgen.

Zum Beispiel kann ein Elektrolyseur - über die gemeinsame Gleichspannungsschiene - direkt an die Gleichstromversorgung eines Photovoltaikfeldes (PV-Feld), d.h. an PV-Generatoren aus miteinander verschalteten PV-Modulen, angeschlossen werden, ohne dass eine Verbindung über einen - in diesem Fall - Photovoltaik-Wechselrichter mit einem Stromnetz vorhanden ist.

Ist ein Elektrolyseur über die gemeinsame Gleichspannungsschiene mit der erneuerbaren Energiequelle/Gleichspannungsquelle, beispielsweise dem PV-Feld (auch ein Gleichstromgenerator einer Windenergieanlage (kurz im Folgenden vereinfacht nur als Windenergieanlage bezeichnet) ist hier möglich), verbunden, so stellt sich auf der gemeinsamen Gleichspannungsschiene ein gemeinsamer Arbeitspunkt von erneuerbarer Energiequelle und Elektrolyseur ein.

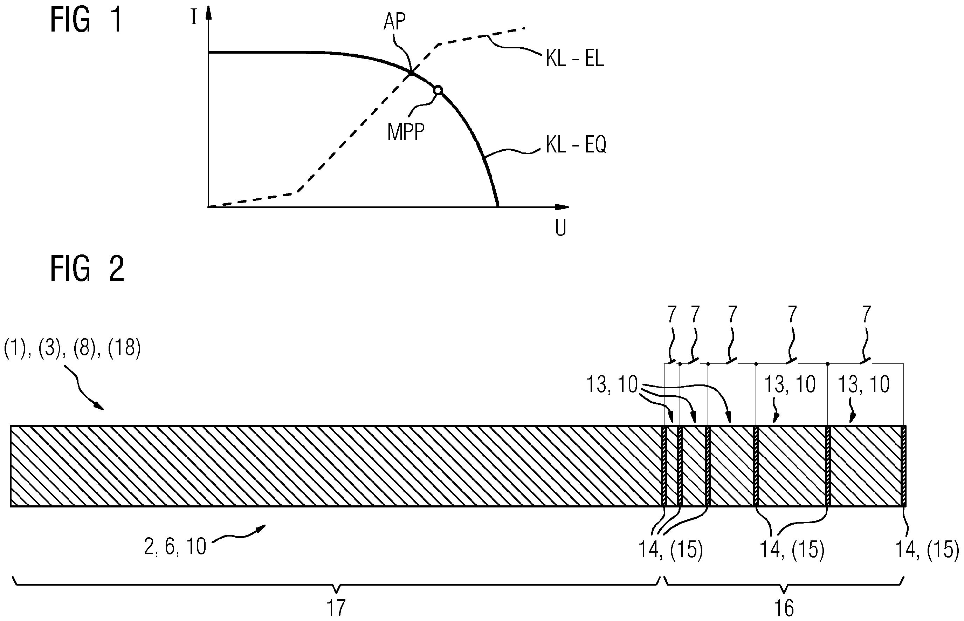

Dieser gemeinsame Arbeitspunkt von Elektrolyseur und erneuerbarer Energiequelle/PV-Feld/Windenergieanlage (beides zusammen im Folgenden auch nur als Energieversorgungssystem bezeichnet) ergibt sich, wie FIG 1 verdeutlicht, als Schnittpunkt einer - spezifischen - I-U-Kennlinie (durchgezogene Kurve; Strom I und Spannung U, im Folgenden kurz auch nur Kennlinie) der erneuerbaren Energiequelle/PV-Feld mit der I-U-Kennlinie (gestrichelte Kurve; Strom I und Spannung U) des Elektrolyseurs.

Dabei ist die Kennlinie der erneuerbaren Energiequelle, wie des PV-Feldes oder der Windenergieanlage, nicht fest, sondern wird durch (Umgebungs-)Parameter beeinflusst. So hängt beispielsweise die Kennlinie eines PV-Feldes von einer Stärke einer Sonneneinstrahlung auf das PV-Feld, einer Umgebungstemperatur bei dem PV-Feld, einer PV-Zellenfläche, mit welchen das PV-Feld betrieben wird, sowie von einer Alterung bei dem PV-Feld ab.

Entsprechende die Kennlinie beeinflussende Umgebungsparameter sind auch bei anderen erneuerbaren Energiequellen bekannt, wie beispielsweise eine Windstärke bei der Windenergieanlage.

Wie weiter FIG 1 verdeutlicht, besitzt die Kennlinie des - in diesem Fall - PV-Feldes einen Punkt, einen sogenannten MPP (maximum power point), an welchem das PV-Feld bzw. die erneuerbare Energiequelle eine maximale Leistungsausbeute liefert ("Leistungsmaximum"). Auch dieser MPP verschiebt sich mit sich ändernden Umgebungsparametern.

Es ist anzustreben, die erneuerbare Energiequelle - zur möglichst maximalen Leistungsausbeute - im Bereich seines (sich unter sich ändernden Umgebungsparameter ändernden) MPP zu betreiben. Vereinfacht ausgedrückt, Arbeitspunkt und MPP sollten nach Möglichkeit zusammenfallen.

Ist die erneuerbare Energiequelle über die Gleichspannungsschiene mit dem Elektrolyseur verbunden und stellt sich so über die Gleichspannungsschiene der gemeinsame Arbeitspunkt von erneuerbarer Energiequelle und Elektrolyseur - als gemeinsamer Schnittpunkt beider Kennlinien - ein, so ist es auch hier wünschenswert, dass der gemeinsame Arbeitspunkt im Bereich des (sich ändernden) MPP der erneuerbaren Energiequelle - und damit im Bereich des Leistungsmaximum der Energiequelle - liegt.

Eine entsprechende Abstimmung bzw. Angleichung des gemeinsamen Arbeitspunktes für einen optimalen Betrieb von erneuerbarer Energiequelle und Elektrolyseur bzw. des Energieversorgungssystems kann, wie bekannt ist, mittels eines DC-DC-Stellers erreicht werden. Allerdings ist hier von Nachteil, dass ein solcher DC-DC-Steller kostenintensiv und fehleranfällig ist bzw. sein kann.

Aus der US 2011/200899 A1 ist ein Elektrolysestack mit mehreren Elektrolysezellen bekannt, welcher in mehrere jeweils eine bestimmte Anzahl von den Elektrolysezellen umfassende, unter Verwendung von Schaltmittel elektrisch schaltbare separate, mechanisch abgegrenzte, eigenständige (Einzel-)Stacks elektrisch unterteilt ist.

Der Erfindung liegt daher die Aufgabe zugrunde, einen Elektrolyseur vorzuschlagen, der die Nachteile aus dem Stand der Technik überwindet. Insbesondere soll die Erfindung es bei einem Energieversorgungssystem der oben genannten Art ermöglichen, dass der Betrieb des diesbezüglichen Elektrolyseurs möglichst nahe am MPP der erneuerbaren Energiequelle erfolgt.

Die Aufgabe wird durch einen Elektrolysestack für einen Elektrolyseur mit mehreren Elektrolysezellen und mehreren Schaltmitteln nach Anspruch 1, einen Elektrolyseur nach Anspruch 8 sowie ein Energieversorgungssystem mit einem solchen Elektrolyseur und einer mit dem Elektrolyseur verbundenen, erneuerbaren Energiequelle nach Anspruch 10 gelöst.

Bei dem erfindungsgemäßen Elektrolysestack mit den mehreren Elektrolysezellen und den mehreren Schaltmitteln ist vorgesehen, dass dieser in mehrere jeweils eine bestimmte Anzahl von den Elektrolysezellen umfassende, unter Verwendung von Schaltmitteln elektrisch kurzschließbare Segmente elektrisch unterteilt ist ("(schaltbarer) segmentierter Elektrolysestack").

Weiterhin ist vorgesehen, dass das Schaltmittel bzw. der Schalter in einem thermischen Kontakt zu einem die Segmentierung bewirkenden Segmentierungsmittel, beispielsweise zu einer in den Elektrolysestack eingebrachten Stromableitplatte, steht.

Bei einem erfindungsgemäßen Elektrolyseur ist mindestens ein solcher Elektrolysestack - mit den kurzschließbaren Segmenten - vorgesehen ("Elektrolyseur mit (schaltbarem) segmentiertem Elektrolysestack").

Auch können bei dem Elektrolyseur mehrere solche, jeweils die kurzschließbaren Segmente aufweisenden Elektrolysestacks vorgesehenen sein. Diese können dann parallel zueinander und/oder in Reihe ge-/verschaltet sein ("Elektrolyseur mit (schaltbaren) segmentierten Elektrolysestacks").

Bei einem weiteren erfindungsgemäßen Elektrolyseur ist vorgesehen, dass mehrere Elektrolysestacks zu mindestens einem String in Reihe geschaltet sind. Weiter sind hier dann Schaltmittel vorgesehen, unter Verwendung derer einer von den zu dem mindestens einen String in Reihe geschalteten Elektrolysestack oder mehrere von den zu dem mindestens einen String in Reihe geschalteten Elektrolysestacks elektrisch kurzschließbar ist bzw. sind ("Elektrolyseur mit schaltbaren Elektrolysestacks").

Bei einem weiteren erfindungsgemäßen Elektrolyseur ist vorgesehen, dass mehrere, jeweils mehrere in Reihe geschaltete Elektrolysestacks aufweisende, Strings parallel geschaltet sind. Weiter sind hier dann Schaltmittel vorgesehen, unter Verwendung derer einer von den Strings oder mehrere von den Strings (elektrisch) zu-/abschaltbar ist bzw. sind ("Elektrolyseur mit schaltbaren Strings").

"Elektrolyseur mit schaltbaren Elektrolysestacks" und "Elektrolyseur mit schaltbaren Strings" können zu einer Matrixstruktur bei einem Elektrolyseur kombiniert sein. Einzelne, mehrere oder alle Elektrolysestacks können dabei auch als "(schaltbarer) segmentierter Elektrolysestack" ausgebildet sein.

Bei dem erfindungsgemäßen Energieversorgungssystem ist vorgesehen, dass der erfindungsgemäße Elektrolyseur an eine erneuerbare Energiequelle, wie eine Photovoltaikanlage oder eine Windenergieanlage, angeschlossen ist.

Hierbei kann - zum Schutz des Energieversorgungssystems bzw. des Elektrolyseurs - der Elektrolyseur bzw. dessen Elektrolysenzellenanzahl derart abgestimmt sein, dass eine maximale Betriebsspannung der Elektrolyse größer oder gleich der maximalen Spannung der erneuerbaren Energiequelle ist.

Der Erfindung liegt die Überlegung bzw. die gemeinsame übergeordnete erfinderische Idee zugrunde, dass durch gezielte Veränderung bzw. Variation der (U-I-)Kennlinie eines Elektrolyseurs dessen Arbeits-/Betriebspunkte (gezielt) veränderbar und damit (gezielt) einstellbar sind.

Kann so die Kennlinie eines Elektrolyseurs veränderbar/variabel gestaltet bzw. eingestellt werden ("Leistungsanpassung"), so wird es dadurch, d.h. durch Änderung/Einstellung der Kennlinie des Elektrolyseurs bzw. durch dessen Leistungsanpassung, möglich, den Elektrolyseur und ein mit diesem verbundenes und diesen betreibendes System, wie insbesondere eine Gleichspannung liefernde Energiequelle, beispielsweise eine erneuerbare Energiequelle, derart optimiert aufeinander abzustimmen, dass der gemeinsame Arbeitpunkt beider Systeme im Bereich des Leistungsmaximums bzw. MPP des mit dem Elektrolyseur verbundenen und diesen betreibenden Systems liegt (Angleichung von Elektrolyseurspannung/Elektrolysestackspannung und Spannung des den Elektrolyseur betreibenden Systems bzw. "optimierter Systemabgleich" durch gemeinsamen Arbeitspunkt im Bereich des MPP des den Elektrolyseur betreibenden Systems), ohne dass eine diesbezügliche Elektronik, wie zusätzliche Wandler, Wechselrichter und/oder DC-DC-Steller, notwendig sind. Kosten und/oder Fehlerrisiken können so minimiert werden.

Diese so durch die Erfindung erreichte Flexibilität bei der Leistungsanpassung bzw. der Einstellung der Kennlinie des Elektrolyseurs und dadurch möglichen optimierten Systemabgleich des Elektrolyseurs mit einem anderen System erweist sich insbesondere dann von Vorteil, wenn der Elektrolyseur durch ein elektrische Energie lieferndes System betrieben wird, dessen Kennlinie ebenfalls - insbesondere unter sich ändernden Umgebungsparameter - variiert, wie beispielsweise bei erneuerbaren Energiequellen.

Diese erfindungsgemäße Kennlinien-Veränderung/Variation/Einstellung kann - vereinfacht und anschaulich ausgedrückt - dadurch realisiert werden, dass der Elektrolysestack eines Elektrolyseurs einzeln schaltbare Segmente aufweist, wobei durch Schaltung eines solchen Segmentes dieses elektrisch kurzschließbar bzw. elektrisch überbrückbar ist ("(schaltbarer) segmentierter Elektrolysestack").

Ändert sich - durch entsprechende Schaltung - mit dem einen bzw. mit den kurzgeschlossenen/überbrückten Segmenten des Elektrolysestacks die Anzahl der "aktiven" Elektrolysezellen im Elektrolysestack, so ändert sich dadurch auch die Kennlinie des Elektrolyseurs und so auch dessen Arbeitspunkte. Anders ausgedrückt, die Elektrolysestackspannung kann gezielt verändert werden.

Diese erfindungsgemäße Kennlinien-Veränderung/Variation/Einstellung kann - ebenfalls vereinfacht und anschaulich ausgedrückt - auch dadurch realisiert werden, dass bei einem Elektrolyseur mit mehreren zu einem String in Reihe geschalteten Elektrolysestacks ein oder mehrere dieser Elektrolysestacks elektrisch kurzschließbar bzw. überbrückbar sind ("Elektrolyseur mit schaltbaren Elektrolysestacks").

Ändert sich - durch entsprechende Schaltung - mit dem einen bzw. mit den kurzgeschlossenen/überbrückten Elektrolysestacks des Strings so auch hier die Anzahl der "aktiven" Elektrolysezellen im Elektrolyseur, so ändert sich dadurch auch dessen Kennlinie und so auch dessen Arbeitspunkte. Anders ausgedrückt, die Elektrolyseurspannung kann gezielt verändert werden.

Ferner kann diese erfindungsgemäße Kennlinien-Veränderung/ Variation/Einstellung - auch vereinfacht und anschaulich ausgedrückt - auch dadurch realisiert werden, dass bei einem Elektrolyseur mit mehreren, jeweils mehrere in Reihe geschalteten Elektrolysestacks aufweisende, parallel geschaltete Strings einer oder mehrere dieser Strings elektrisch zu-/abschaltbar sind ("Elektrolyseur mit schaltbaren Strings"/ "Zu-/Abschaltung von Strings").

Ändert sich - durch entsprechende Schaltung - mit dem einen bzw. mit den zu-/abgeschalteten Strings des Elektrolyseurs so auch hier die Anzahl der "aktiven" Elektrolysezellen im Elektrolyseur, so ändert sich dadurch auch dessen Kennlinie und so auch dessen Arbeitspunkte. Anders ausgedrückt, die Elektrolyseurspannung kann gezielt verändert werden.

Lässt sich so durch die Erfindung auf sehr einfache Weise die Kennlinie eines Elektrolyseurs flexibel ändern, so wird es hierdurch auf sehr einfache und flexible Weise möglich, einen Elektrolyseur und eine Gleichspannung liefernde Energiequelle, welche den Elektrolyseur betreibt, - durch entsprechende Schaltung der Schaltmittel bei dem Elektrolysestack/Elektrolyseur - optimiert aufeinander abzustimmen.

Hierbei kann die Erfindung auch auf komplexe und teure Leistungselektronik, wie DC-DC-Steller u.ä., verzichten, ermöglicht hierdurch einen kostengünstigen Inselbetrieb der Energiequelle, wie beispielsweise einer regenerativen Energieanlage (Photovoltaik-/Windkraftanlage), baut klein und kompakt und lässt überdies durch die Elektrolyse beim Elektrolyseur einen Energieträger, wie beispielsweise Wasserstoff, entstehen.

Bevorzugte Weiterbildungen der Erfindung ergeben sich auch aus den abhängigen Ansprüchen und/oder aus nachfolgenden Erläuterungen.

Um diese elektrische (Zu-/Ab-)Schaltung der Segmente bzw. der Elektrolysestacks bzw. der Strings zu deren Kurzschließen/ Überbrücken/Zu- bzw. Abschalten zu realisieren, können bevorzugt Schalter auf Basis eines Leistungshalbleiters, insbesondere Halbleiterschalter, z.B. als IGBT, vorgesehen sein. Anders ausgedrückt, die Schaltmittel können bevorzugt Schalter auf Basis eines Leistungshalbleiters, insbesondere Halbleiterschalter, sein. Derartige Schalter sind vielfach erprobt, standardisiert und kostengünstig.

Auch mechanische Schalter oder eine Kombination von elektrischen und mechanischen Schaltern sind vorsehbar.

Bevorzugt kann die Segmentierung bei dem Elektrolysestack durch Anbringung von Leitungsanschlüssen an Elektrodenplatten, insbesondere an - gegebenenfalls modifizierten - Bipolarplatten mit genügend hoher Querleitfähigkeit, des Elektrolysestacks erfolgen. Besonders bevorzugt, insbesondere wenn der Querleitfähigkeit der Elektrodenplatten zu gering ist, kann die Segmentierung durch Einbringung von Stromableitplatten in den Elektrolysestack erfolgen.

Das Segmentiermittel kann gleichzeitig als Kühlkörper für das Schaltmittel bzw. den Schalter dienen. Der so entstehende Elektrolysestack bzw. Elektrolyseur baut darüber hinaus so auch äußerst kompakt.

Auch kann vorgesehen sein, dass die Anzahl der Elektrolysezellen der Segmente jeweils unterschiedlich ist. Besonders bevorzugt kann hier weiter vorgesehen sein, dass die Anzahl der Elektrolysezellen eine mathematische Reihe bildet, beispielsweise nach folgender Formel,

$$a * (2^x)$$

(mit a = natürliche Zahl, x = Anzahl der Segmente). Hierdurch lässt sich eine Spannung des Elektrolysestacks sehr flexibel anpassen, bei gleichzeitig minimierter Anzahl von Segmenten.

Wählt man beispielsweise a = 1 und x = 5, so erhält man eine Segmentierung von Segmenten bzw. Elektrolysezellgruppen zu 2, 4, 8, 16 und 32 Elektrolysezellen. Durch Schaltung bzw. Kurzschließen/Überbrücken einzelner Segmente/Elektrolysezellgruppen können so insgesamt 32 verschiedene Spannungswerte über die Segmentierung eingestellt werden.

Auch kann vorgesehen sein, dass der Elektrolysestack einen segmentierten Bereich - mit der Segmentierung - sowie einen nicht segmentierten (statischen) Bereich aufweist.

Dabei kann bevorzugt weiter vorgesehen sein, dass der segmentierte Bereich ca. 1/4 bis 1/3 des Elektrolysestacks, insbesondere ca. 1/4 oder ca. 1/3 des Elektrolysestacks, umfasst. Entsprechend kann so auch bevorzugt vorgesehen sein, dass der nicht segmentierte/statische Bereich ca. 2/3 bis 3/4 des Elektrolysestacks, insbesondere ca. 2/3 oder ca. 3/4 des Elektrolysestacks, umfasst.

Ferner kann vorgesehen sein, dass der Elektrolysestack ca. 100 bis 400, insbesondere, wie üblich, ca. 200 bis 300, Elektrolysezellen aufweist.

Für einen - so üblichen - Elektrolysestack mit beispielsweise 250 Elektrolysezellen ergibt sich so ein segmentierter Bereich von ca. 40 bis 85 Elektrolysezellen bzw. ein statischer/nicht segmentierter Bereich von ca. 165 bis 210 Elektrolysezellen.

Für den - so üblichen - Elektrolysestack mit den beispielsweise 250 Elektrolysezellen und einer ca. 2,2 V Zellspannung ergibt sich so - bei entsprechender Bemessung des segmentierten/statischen Bereichs - ein Regelbereich von ca. 300 V bis 550 V.

Durch die "ungleichmäßige" Segmentierung (des segmentieren Bereichs des Elektrolyseurs) in Kombination mit der Unterteilung des Elektrolyseurs in den segmentierten und den nicht segmentierten Bereich lassen sich so Erfordernisse von der den Elektrolyseur betreibenden Energiequelle optimal abbilden - und es entsteht eine schrittweise Regelung des Gesamtsystems aus Elektrolyseur und Energiequelle.

Weiter kann auch ein Elektrolyseur vorgesehen sein, bei welchem mindestens ein solcher erfindungsgemäßer segmentierter Elektrolysestack, insbesondere auch mehrere, insbesondere parallel geschaltete erfindungsgemäße segmentierte Elektrolysestacks, zusammen, insbesondere in Parallelschaltung, mit nicht segmentierten Elektrolysestacks verbaut sind. Während bei dem erfindungsgemäßen segmentierten Elektrolysestack ca. 100 bis 400, insbesondere ca. 200 bis 300, Elektrolysezellen verbaut sein können - wodurch sich (Spannungs-)Regelbereiche zwischen ca. 300 V und 550 V realisieren lassen, kann es sinnvoll sein bei einem nicht segmentierten Elektrolysestack ca. 10 bis 20 Elektrolysezellen zu verbauen. Dieser kann dann mit Spannungen zwischen 20 V und 50 V betrieben werden.

Weiter kann bei dem Elektrolyseur auch eine Erfassungseinheit zur Erfassung einer Betriebsstundenzahl von zumindest einigen der Elektrolysestacks vorgesehen sein.

Ferner kann die Erfassungseinheit auch eingerichtet sein, um leistungsbezogene Messdaten, wie eine Wirkleistung oder diesbezüglich verwandte Messdaten, zum Beispiel eine DC-Spannung und einen DC-Strom der Energiequelle oder eine Produktionsmenge Wasserstoff/Elektrolysezelle, zu erfassen.

Auch kann die Erfassungseinheit eingerichtet sein, um Umgebungsparameter, insbesondere bei der Energiequelle, wie beispielsweise eine Einstrahlung oder ein Temperatur bei einer PV-Anlage, zu erfassen.

Weiterhin kann die Erfassungseinheit eingerichtet sein, um einen aktuellen MPP aus einer Kennlinie der Energiequelle zu ermitteln.

Auch kann eine Steuereinheit zur Steuerung der Schaltmittel - und so zu Kurz-/Zu-/Abschaltung bzw. Überbrückung der Segmente/Elektrolysestacks/Strings - vorgesehen sein, wobei die Steuereinheit insbesondere derart eingerichtet sein kann, dass die Steuerung (der Schaltmittel) durch die Steuereinheit aufgrund von den leistungsbezogenen Messdaten und/oder abhängig von der erfassten Betriebsstundenzahl und/oder des ermittelten aktuellen MPP erfolgt.

Insbesondere lässt sich so - auf Basis der erfassten Betriebsstunden - eine "gleichmäßige" Kurz-/Zu-/Abschaltung bzw. Überbrückung, kurz und vereinfacht ausgedrückt eine gleichmäßige Aktivierung, über alle bzw. der Segmente/ Elektrolysestacks/Strings - und damit ein gleichmäßiger (Bauteil-)Verschleiß erreichen.

Hierdurch lässt sich eine Lebensdauer des Elektrolyseurs verlängern.

Besonders bevorzugt ist der Elektrolyseur ein alkalischer Elektrolyseur oder ein saurer bzw. PEM-Elektrolyseur. Der Elektrolyseur kann mit jeder Art von Gleichspannung liefernder Energiequelle direkt verbunden sein. Besonders bevorzugt ist die Energiequelle eine erneuerbare/regenerative Energiequelle.

Die erneuerbare Energiequelle ist besonders bevorzugt ein regenerativer Stromerzeuger, insbesondere eine Photovoltaikanlage oder eine Windkraftanlage.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen gleiche Bezugszeichen auf.

Es zeigen:

FIG 1 ein I-U-Diagramm mit den Kennlinien einer Energiequelle und eines Elektrolyseurs,

FIG 2 einen Elektrolysestack eines Elektrolyseurs gemäß einem Ausführungsbeispiel,

FIG 3 ein Ersatzschaltbild mit einer erneuerbaren Energiequelle und einem direkt angeschlossenen Elektrolyseur mit mehreren, jeweils mehrere Elektrolysestacks aufweisenden Strings gemäß einem Ausführungsbeispiel,

FIG 4 ein I-U-Diagramm mit der Kennlinie einer Energiequelle und mehreren Kennlinien eines Elektrolyseurs bei veränderter Reihenschaltung von Elektrolysestacks und

FIG 5 ein I-U-Diagramm mit der Kennlinie einer Energiequelle und mehreren Kennlinien eines Elektrolyseurs bei veränderter Parallelschaltung von Strings.

"(schaltbarer) segmentierter Elektrolysestack eines Elektrolyseurs" (FIG 2)

FIG 2 zeigt einen von mehreren, jeweils gleich aufgebauten und zueinander parallel verschalteten, steuerbaren Elektrolysestack 6 eines - in diesem Fall - PEM-Elektrolyseurs 2 zur Wasserstoffelektrolyse (kurz im Folgenden nur Elektrolyseur 2).

Der Elektrolyseur 2 ist unmittelbar an eine regenerative Energiequelle 3, in diesem Fall eine Photovoltaikanlage bzw. ein Photovoltaikfeld (kurz PV-Anlage bzw. PV-Feld) 3, angeschlossen (nicht dargestellt), worüber er mit - die Wasserstoffelektrolyse im Elektrolyseur 2 bewirkende - Gleichspannung versorgt wird.

Die Elektrolysestacks 6 sind jeweils bzw. der in FIG 2 gezeigte eine Elektrolysestack 6 ist aus einer Vielzahl von elektrisch in Serie geschalteten Elektrolysezellen 10, hier insgesamt 250 Elektrolysezellen 10, aufgebaut.

Die Gesamtzahl aller Elektrolysezellen 10 des Elektrolyseurs 2 ist derart abgestimmt, dass die maximale Betriebsspannung der Elektrolyse größer oder gleich der maximalen PV-Spannung des PV-Feldes ist.

Die Elektrolysezelle 10 selbst besteht dabei wiederum aus einer Anode und einer Kathode, welche als Bipolarplatten 15 ausgebildet sind, sowie einer dazwischen angeordneten Polymer-Elektrolyt-Membran.

Wie weiter FIG 2 zeigt, weist der Elektrolysestack 6 einen segmentieren Bereich 16 sowie einen nicht segmentierten, statischen Bereich 17 mit dort gebündelten Elektrolysezellen 10 auf, wobei der segmentierte Bereich ca. 25% des Elektrolysestacks 6, d.h. 25% aller Elektrolysezellen 10 des Elektrolysestacks 6, umfasst.

In dem segmentierten Bereich 16 des Elektrolysestacks 6 sind insgesamt 5 Segmente 13 (Elektrolysezellengruppen/-bündel 13) ausgebildet, deren jedes eine unterschiedliche Anzahl von Elektrolysezellen 10 bündelt.

Die Anzahl der Elektrolysezellen 10 im jeweiligen Segment 13 bemisst sich nach einer mathematischen Reihe mit der folgenden (allgemeinen) Formel,

$$a * (2^x)$$

(mit a = natürliche Zahl, x = Anzahl der Segmente), wobei hier a = 1 und x = 5 (d.h. 5 Segmente 13) realisiert ist.

So erhält man die Segmentierung 13 mit den 5 Segmenten 13 bzw. Elektrolysezellengruppen/-bündel 13 zu 2, 4, 8, 16 und 32 Elektrolysezellen 10.

Die Segmentierung 13 bei den Elektrolysezellen 10 des segmentierten Bereichs 16 des Elektrolysestacks 6 - in die 5 Segmente mit den 2, 4, 8, 16 und 32 Elektrolysezellen - wird über Stromableitbleche 14 realisiert, die an entsprechender Stelle in den Elektrolysestack 6 eingeschoben sind.

Mittels Halbleiterschalter 11, hier als IGBT, deren Ein- und Ausschalten individuell steuerbar ist und die jeweils direkt auf die Stromableitbleche 14 montiert sind, sind die Segmente 13 kurzschließ-/überbrückbar.

Bei dem Elektrolysestack 6 mit den 250 Elektrolysezellen 10 und der Segmentierung 13 in die fünf Segmente 13 mit 2, 4, 6, 16 und 32 Elektrolysezellenbündel 13 ergibt sich so beispielsweise ein Regel-/Steuerbereich von ca. 300 V bis 550 V.

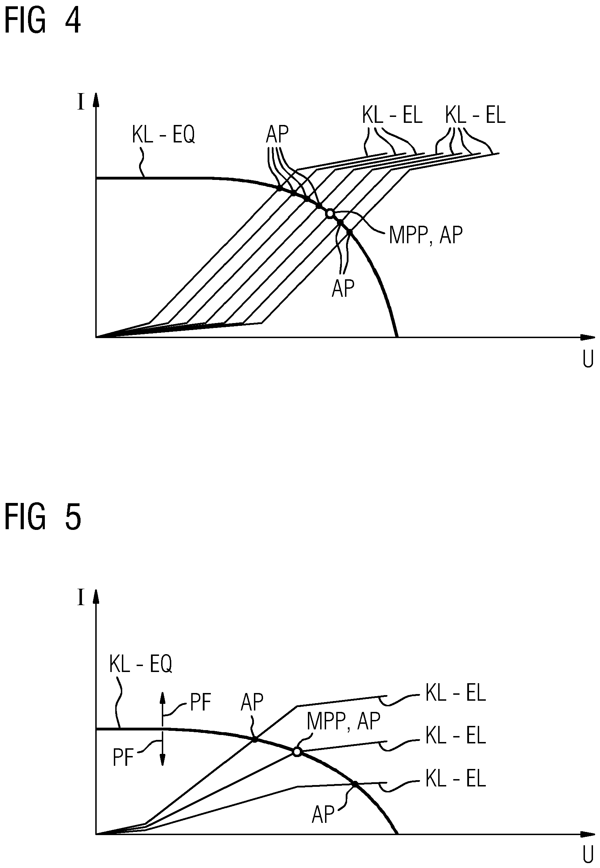

Durch entsprechendes, gesteuertes Ein-/Ausschalten bzw. Kurzschalten/Überbrücken einzelner bzw. mehrere Segmente 13 (in beliebiger Kombination) kann so die Anzahl der "aktiven" Elektrolysezellen 10 des Elektrolysestacks 6, damit die Spannung des entsprechenden Elektrolysestacks 6 (Elektrolysestackspannung) und so in Folge die auch die Spannung des Elektrolyseurs 2 gemäß den Kennlinien KL-EL in FIG 4 verändert werden (Veränderung/Verschiebung der Kennlinie KL-EL) - und so der PV-Spannung (schrittweise) angeglichen werden. D.h., der Arbeitspunkt des Elektrolyseurs 2 kann hin zum Leistungsmaximum MPP (maximum power point) der den Elektrolyseur 2 betreibenden Energiequelle 3 verschoben werden.

Sind die Halbleiterschalter 11 jeweils direkt auf die Stromableitbleche 14 montiert, so dient das jeweilige Stromableitblech 14 gleichzeitig als Kühlkörper für den Halbleiterschalter 11. Der so entstehende Verbund ist somit besonders kompakt, eine separate Schalterkühlung ist hier nicht notwendig.

Die Steuerung der Schalter 11, d.h. deren - die Überbrückung bzw. den Kurzschluss der Segmente 13 bewirkendes - Ein- und Ausschalten, erfolgt durch eine Steuereinheit 8 (nicht dargestellt).

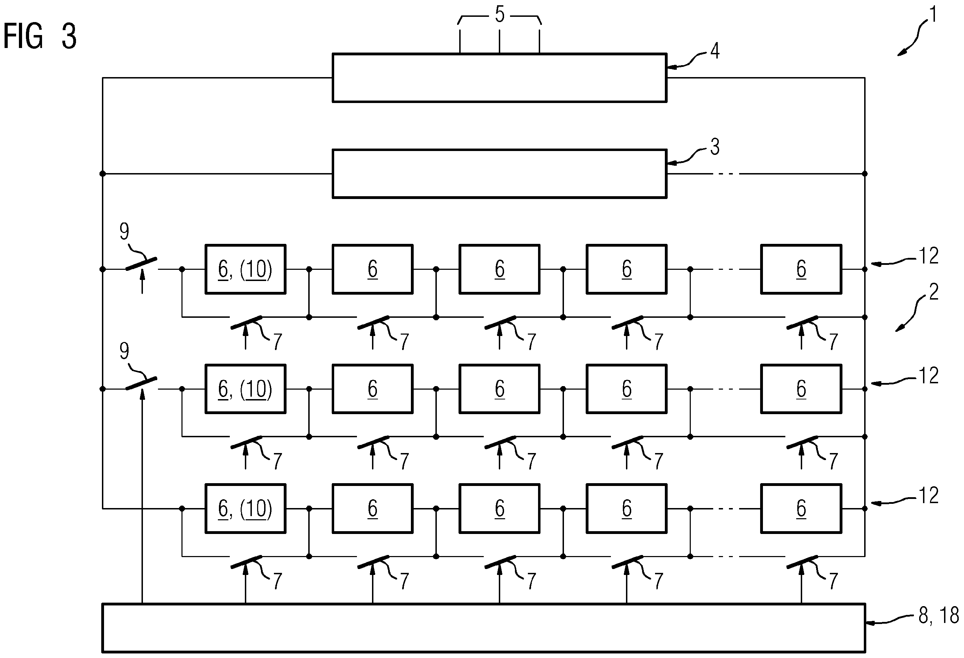

"Elektrolyseur mit schaltbaren Elektrolysestacks und schaltbaren Strings" (FIG 3)

In FIG 3 ist ein erfindungsgemäßes Ersatzschaltbild eines Energieversorgungssystems 1 mit einem steuerbaren Elektrolyseur 2 dargestellt, der direkt an eine erneuerbare Energiequelle 3, hier ein Photovoltaikfeld, und über einen Wechselrichter 4 an ein Stromnetz 5 angeschlossen ist.

Der Elektrolyseur 2 ist matrixartig aus einer Vielzahl von - in diesem Fall 15 in Reihe angeordnete Elektrolysezellen 10 aufweisende - Elektrolysestacks 6 aufgebaut, wobei mehrere (in Reihe geschaltete) Elektrolysestacks 6 einen String 12 bilden und mehrere Strings 12 parallel geschaltet sind.

Weiter ist eine Einrichtung, hier eine - verschiedene Schalter 7, 9 aufweisende - Schalteinrichtung, vorgesehen, mit der die Kennlinie des Elektrolyseurs 2 (KL-EL) durch Zu- und Abschaltung von Elektrolysestacks 6 und/oder Strings 12 veränderbar ist (vgl. FIGen 4 und 5).

Hierzu ist parallel zu den Elektrolysestacks 6 jeweils ein Schalter 7 angeschlossen, der über eine Steuereinheit 8 gemäß FIG 3 ein- oder ausschaltbar ist, wodurch ein Bypass, d.h. ein Kurzschluss bzw. eine Überbrückung für den Strom, parallel zum jeweiligen Elektrolysestack 6 möglich ist. Alternativ können auch mehrere hintereinander geschaltete Elektrolysestacks 6 durch einen Schalter 7 überbrückt werden.

Auf diese Weise kann die Anzahl der in Reihe geschalteten Elektrolysestacks 6 und damit die Spannung des betreffenden Strings 12 gemäß den Kennlinien KL-EL in FIG 4 verändert werden, wodurch der Arbeitspunkt hin zum Leistungsmaximum MPP (maximum power point) verschoben werden kann.

Um eine strommäßige Anpassung zu erreichen, lassen sich einzelne der parallel geschaltete Strings 12 durch Schalter 9 zu- und/oder abschalten, wodurch sich ein Kennlinienfeld mit den veränderbaren Kennlinien KL-EL für den Elektrolyseur 2 gemäß FIG 5 ergibt.

Somit kann die Kennlinie des Elektrolyseurs 2 (KL-EL) der aktuellen Kennlinie der erneuerbaren Energiequelle 3 (KL-EQ) im Betrieb angepasst werden, um einen Betrieb im Leistungsmaximum MPP (maximun power point) bzw. im Bereich des MPP zu ermöglichen.

Zum Beispiel führt eine Abschattung eines Photovoltaikfeldes zu einer Veränderung seiner Kennlinie (Verschiebung der Kennlinie KL-EQ angedeutet durch Pfeile PF in FIG 5), für die eine Anpassung des Arbeitspunktes des Elektrolyseurs 2 zum Betrieb im Leistungsmaximum MPP vorteilhaft ist.

Die Steuerung der Schalter 7, 9 der Schalteinrichtung (auch Schalter 11) durch die Steuereinheit 8 kann aufgrund von leistungsbezogenen Messdaten erfolgen.

Die elektrischen Schalter 7, 9 der Schalteinrichtung (auch Schalter 11) können auf Basis von Leistungshalbleitern bzw. durch Halbleiterschalter ausgeführt sein.

Weiterhin kann mit einer Erfassungseinheit 18 die Betriebsstundenzahl von zumindest einigen der zu- und/oder abschaltbaren Elektrolysestacks 6 erfasst werden.

Dies bietet den Vorteil, die Lebensdauer der Elektrolysestacks 6 gleichmäßig auszunutzen, indem nach Möglichkeit Elektrolysestacks 6 mit einer niedrigen Betriebsstundenzahl hinzugeschaltet bzw. solche mit einer hohen Betriebsstundenzahl abgeschaltet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrolysestack (6) mit mehreren Elektrolysezellen (10) und mehreren Schaltmitteln (11), welcher in mehrere jeweils eine bestimmte Anzahl von den Elektrolysezellen (10) umfassende, unter Verwendung der Schaltmittel (11) elektrisch kurzschließbare Segmente (13) elektrisch unterteilt ist, **dadurch gekennzeichnet, dass**
   die Segmentierung (13) durch Einbringung von Stromableitplatten (14) in den Elektrolysestack (6) hergestellt ist und die Schaltmittel (11) in einem thermischen Kontakt zu dem die Segmentierung (13) bewirkenden Stromableitplatten (14) stehen.

2. Elektrolysestack (6) nach mindestens dem voranstehenden Anspruch,
**dadurch gekennzeichnet, dass**
die Anzahl der Elektrolysezellen (10) der Segmente (13) jeweils unterschiedlich ist.

3. Elektrolysestack (6) nach mindestens dem voranstehenden Anspruch,
**dadurch gekennzeichnet, dass**
die Anzahl der Elektrolysezellen (10) eine mathematische Reihe bilden, insbesondere nach folgender Formel,

$$a * (2^x)$$

(mit a = natürliche Zahl, x = Anzahl der Segmente (10)) bestimmt sind.

4. Elektrolysestack (6) nach mindestens einem der voranstehenden Ansprüche,
**dadurch gekennzeichnet, dass**
der Elektrolysestack (6) einen segmentierten Bereich (16) mit der Segmentierung (13) sowie einen nicht segmentierten (statischen) Bereich (17) aufweist.

5. Elektrolysestack (6) nach mindestens dem voranstehenden Anspruch,
**dadurch gekennzeichnet, dass**
der segmentierte Bereich (16) ca. 1/4 bis 1/3 des Elektrolysestacks (6), insbesondere ca. 1/4 oder ca. 1/3 des Elektrolysestacks (6), umfasst und/oder dass der nicht segmentierte Bereich (17) ca. 2/3 bis 3/4 des Elektrolysestacks (6), insbesondere ca. 2/3 oder ca. 3/4 des Elektrolysestacks (6), umfasst.

6. Elektrolysestack (6) nach mindestens einem der voranstehenden Ansprüche,
**dadurch gekennzeichnet, dass**
die Schaltmittel (11) einen Schalter (11) auf Basis eines Leistungshalbleiters, insbesondere einen Halbleiterschalter (11), aufweisen.

7. Elektrolysestack (6) nach mindestens einem der voranstehenden Ansprüche,
**dadurch gekennzeichnet, dass**
der Elektrolysestack (6) ca. 100 bis 400, insbesondere ca. 200 bis 300, Elektrolysezellen (10) aufweist, wobei insbesondere die Elektrolysezellen (10) der Segmente (13) jeweils mit Spannung zwischen 20 V bis 50 V betreibbar sind.

8. Elektrolyseur (2) mit mindestens einem Elektrolysestack (6) nach mindestens einem der voranstehenden Ansprüche oder mit mehreren, parallel und/oder in Reihe geschalteten Elektrolysestacks (6) jeweils nach mindestens einem der voranstehenden Ansprüche.

9. Elektrolyseur (2) nach mindestens dem voranstehenden Anspruch,
gekennzeichnet
mit einer Erfassungseinheit (18) zur Erfassung einer Betriebsstundenzahl von zumindest einigen der Elektrolysestacks (6)
und/oder
mit einer Steuereinheit (8) zur Steuerung der Schaltmittel (7, 9, 11), wobei die Steuereinheit insbesondere derart eingerichtet ist, dass die Steuerung durch die Steuereinheit (8) aufgrund von leistungsbezogenen Messdaten und/oder abhängig von der erfassten Betriebsstundenzahl erfolgt.

10. Energieversorgungssystem (1) mit einer erneuerbaren Energiequelle (3) und einem daran angeschlossenen Elektrolyseur (2) nach mindestens einem der voranstehenden Ansprüche 8 bis 9, wobei insbesondere die erneuerbare Energiequelle (3) eine Photovoltaikanlage oder eine Windenergieanlage ist.

## Claims

1. Electrolysis stack (6) having a plurality of electrolysis cells (10) and a plurality of switching means (11), which is subdivided into a plurality of segments (13), each of which comprises a specific number of the electrolysis cells (10) and can be electrically short-circuited using switching means (11),
**characterised in that**
the segmentation (13) is effected by incorporating current discharge plates (14) into the electrolysis stack (6) and the switching means (11) are in thermal contact with the current discharge plates (14) which effect the segmentation (13).

2. Electrolysis stack (6) according to at least the preceding claim,
**characterised in that**
the number of electrolysis cells (10) in the segments (13) differs in each case.

3. Electrolysis stack (6) according to at least the preceding claim,
**characterised in that**
the number of electrolysis cells (10) forms a mathematical sequence, and is specified in particular according to the following formula:

$$a * (2^x)$$

(where a = a natural number and x = the number of segments (10)).

**4.** Electrolysis stack (6) according to at least one of the preceding claims,
**characterised in that**
the electrolysis stack (6) has a segmented region (16) with the segmentation (13) and a non-segmented (static) region (17).

**5.** Electrolysis stack (6) according to at least the preceding claim,
**characterised in that**
the segmented region (16) comprises approximately 1/4 to 1/3 of the electrolysis stack (6), in particular approximately 1/4 or approximately 1/3 of the electrolysis stack (6), and/or that the non-segmented region (17) comprises approximately 2/3 to 3/4 of the electrolysis stack (6), in particular approximately 2/3 or approximately 3/4 of the electrolysis stack (6).

**6.** Electrolysis stack (6) according to at least one of the preceding claims,
**characterised in that**
the switching means (11) have a switch (11) which is based on a power semiconductor, in particular a semiconductor switch (11).

**7.** Electrolysis stack (6) according to at least one of the preceding claims,
**characterised in that**
the electrolysis stack (6) comprises approximately 100 to 400, in particular approximately 200 to 300, electrolysis cells (10), wherein the electrolysis cells (10) of the segments (13) can each be operated at a voltage between 20 V to 50 V in particular.

**8.** Electrolyser (2) having at least one electrolysis stack (6) according to at least one of the preceding claims or having a plurality of parallel-connected and/or series-connected electrolysis stacks (6) according to at least one of the preceding claims.

**9.** Electrolyser (2) according to at least one of the preceding claims,
**characterised**
**by** a recording unit (18) for recording a number of operating hours of at least some of the electrolysis stacks (6)
and/or
by a control unit (8) for controlling the switching means (7, 9, 11), wherein the control unit is configured in particular such that the control is effected by the control unit (8) on the basis of the power-related measurement data and/or as a function of the recorded number of operating hours.

**10.** Energy supply system (1) having a renewable energy source (3) and connected thereto an electrolyser (2) according to at least one of the preceding claims 8 to 9, wherein the renewable energy source (3) is a photovoltaic installation or a wind energy installation in particular.

**Revendications**

**1.** Empilement (6) d'électrolyse, comprenant plusieurs cellules (10) d'électrolyse et plusieurs moyens (11) de commutation, qui est subdivisé électriquement en plusieurs segments (13) pouvant être court-circuités électriquement en utilisant les moyens (11) de commutation et comprenant respectivement un nombre déterminé de cellules (10) d'électrolyse,
**caractérisé**
**en ce que** la segmentation (13) est produite par introduction de plaques (14) de déviation du courant dans l'empilement (6) d'électrolyse et les moyens (11) de commutation sont en contact thermique avec la plaque (14) de dérivation du courant provoquant la segmentation (13).

**2.** Empilement (6) d'électrolyse suivant au moins l'une des revendications précédentes,
**caractérisé en ce que**
le nombre des cellules (10) d'électrolyse des segments (13) est différent.

**3.** Empilement (6) d'électrolyse suivant au moins l'une des revendications précédentes,
**caractérisé en ce que** le nombre des cellules (10) d'électrolyse forme une suite mathématique, en étant déterminé notamment selon la formule suivante,

$$a * (2^{*})$$

(avec a = nombre naturel, x = nombre des segments (10))

**4.** Empilement (6) d'électrolyse suivant au moins l'une des revendications précédentes, **caractérisé en ce que** l'empilement (6) d'électrolyse a une partie (16) segmentée ayant la segmentation (13) ainsi qu'une partie (17) non segmentée (statique)

**5.** Empilement (6) d'électrolyse suivant au moins l'une des revendications précédentes, **caractérisé en ce que** la partie (16) segmentée comprend d'environ 1/4 à environ 1/3 de l'empilement (6) d'électrolyse, notamment environ 1/4 ou environ 1/3 de l'empilement (6) d'électrolyse et/ou **en ce que** la partie (17) non segmentée comprend d'environ 2/3 à environ 3/4 de l'empilement (6) d'électrolyse notamment environ 2/3 ou environ 3/4 de l'empilement (6) d'électrolyse.

**6.** Empilement (6) d'électrolyse suivant au moins l'une des revendications précédentes, **caractérisé en ce que** les moyens (11) de commutation ont un interrupteur (11) à base d'un semiconducteur de puissance, notamment un interrupteur (11) à semiconducteur.

**7.** Empilement (6) d'électrolyse suivant au moins l'une des revendications précédentes, **caractérisé en ce que** l'empilement (6) d'électrolyse a d'environ 100 à 400, notamment d'environ 200 à 300, cellules (10) d'électrolyse, les cellules (10) d'électrolyse des segments (13) pouvant fonctionner notamment respectivement à une tension comprise entre 20 V et 50 V.

**8.** Electrolyseur (2) comprenant au moins un empilement (6) d'électrolyse suivant au moins l'une des revendications précédentes ou comprenant plusieurs empilements (6) d'électrolyse montés en parallèle et/ou en série respectivement suivant au moins l'une des revendications précédentes.

**9.** Electrolyseur (2) suivant au moins l'une des revendications précédentes,
**caractérisé**
**en ce qu'**il comprend une unité (18) de détection d'un nombre d'heures de fonctionnement d'au moins certains des empilements (6) d'électrolyse et/ou comprenant une unité (8) de commande des moyens (7, 9, 11) de commutation, l'unité de commande étant conçue notamment de manière à ce que la commande s'effectue par l'unité (8) de commande sur la base de données de mesure se rapportant à la puissance et/ou en fonction du nombre d'heures de fonctionnement détecté.

**10.** Système (1) d'alimentation en énergie, comprenant une source (3) d'énergie renouvelable et un électrolyseur (2) qui y est raccordé suivant au moins l'une des revendications 8 à 9 précédentes, la source (3) d'énergie renouvelable étant notamment une installation photovoltaïque ou une éolienne.

FIG 1
I
U
KL - EL
KL - EQ
AP
MPP
FIG 2
7
13, 10
14, (15)
16
17
2, 6, 10
(1), (3), (8), (18)

FIG 3
1
2
3
4
5
6
6, (10)
7
8, 18
9
12

FIG 4

I
KL - EQ
AP
KL - EL
KL - EL
MPP, AP
AP
U

FIG 5

I
KL - EQ
PF
AP
PF
MPP, AP
KL - EL
KL - EL
KL - EL
AP
U

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2011200899 A1